# EUROPEAN PATENT APPLICATION

(11) **EP 1 391 232 A1**
(43) Date of publication of application: **25.02.2004**
(21) Application number: 03018914.6
(22) Date of filing: 20.08.2003
(51) Int. Cl.: B01D 46/24

(54) **Filter element, filter assembly, gas turbine system, and methods**

(30) Priority: 23.08.2002 US 405461 P; 12.08.2003 US 639966
(71) Applicant: DONALDSON COMPANY, INC., Minneapolis, MN 55440-1299 (US)
(72) Inventor: Warth Scott B., Spillville Iowa 52168 (US); Schrage Kevin J., Spring Valley Minnesota 55975 (US)
(74) Representative: Eisenführ, Speiser & Partner

(57) **Abstract**

A filter element includes a region of filter media and at least one end cap secured to the filter media. The end cap includes a protrusion that is shaped in order to mate with another filter element. The shaped end cap can act as a centering device. A filter assembly can be constructed including a first filter element and a second filter element. Each of the first and second filter elements has an end cap that includes a projection and recess arrangement. A seal is formed between the first filter element and the second filter element by compression of the two elements together with an engagement or inter-nesting of the projection and recess arrangement of the first filter element with the projection and recess arrangement of the second filter element. The filter element assembly is useable in a variety of systems including a gas turbine air intake system.

## Description

### TECHNICAL FIELD

This disclosure relates to filter arrangements. In certain aspects, it relates to filter elements having a particular type of sealing arrangement. In certain applications, it concerns filter arrangements for use in the air intake stream of gas turbine systems.

### BACKGROUND

Air or other fluid often needs to be cleaned before it is useable in certain systems. Such systems may include, for example, air intake streams in internal combustion engines; air intake streams into generators; liquid intake streams into oil or hydraulic filters; or air intake streams into gas turbine systems.

In many systems, it is important to have the fluid cleaned such that the particulate matter or other foreign material does not harm the components of the system. Continuing efforts are sought to improve ways to clean fluid intake streams.

### SUMMARY

A filter element is provided that includes a region of filter media and at least one end cap secured to the filter media. The end cap includes a protrusion that is shaped in order to mate with another filter element. The shaped end cap acts as a centering device, in preferred embodiments.

In one preferred embodiment, the end cap includes an outer surface having a landing and protrusion. The protrusion forms a continuous closed ring, and the protrusion has a plateau and a ramp. The ramp extends between the plateau and the landing at a non-orthogonal angle thereto.

A filter assembly can be constructed from a filter element of the type described above. The filter assembly includes a first filter element and a second filter element. Each of the first and second filter elements has an end cap that includes a projection and recess arrangement. A seal is formed between the first filter element and the second filter element by compression of the two elements together with an engagement or inter-nesting of the projection and recess arrangement of the first filter element with the projection and recess arrangement of the second filter element.

The filter element assembly is useable in a variety of systems. In the particular embodiment described in this disclosure, the filter assembly is useable in a gas turbine system in order to clean the intake air before being directed into the turbine.

Methods of operation and servicing are provided. Methods of installing are provided. Such methods preferably utilize filter element arrangements described herein.

### BRIEF DESCRIPTION OF THE DRAWINGS

FIG. 1 is a schematic, cross-sectional view of a gas turbine intake filtration system according to principles of this disclosure;
FIG. 2 is a schematic, cross-sectional view of a filter assembly useable in the gas turbine intake filtration system of FIG. 1;
FIG. 3 is a schematic, exploded view of the filter assembly depicted in FIG. 2;
FIG. 4 is an exploded view, analogous to the view shown in FIG. 3, but depicting an alternate embodiment;
FIG. 5 is an enlarged view of a portion of the filter assembly depicted in FIG. 3;
FIG. 6 is an enlarged view of a portion of the filter assembly depicted in FIG. 3;
FIG. 7 is an end view of one of the filter elements in the filter assemblies depicted in FIGS. 2 - 4; and
FIG. 8 is an enlarged, fragmented cross-sectional view of a portion of one of the filter elements depicted in FIGS. 2 - 4.

### DETAILED DESCRIPTION

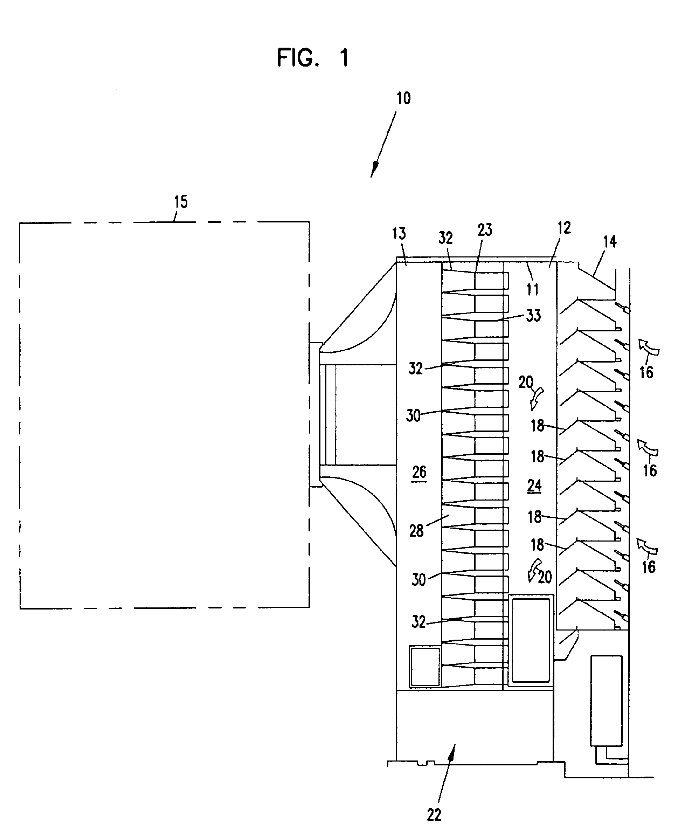

### A. Gas Turbine System, FIG. 1

In FIG. 1, a schematic, cross-sectional depiction of a gas turbine filter system 10 is presented. The system 10 includes a chamber 11 having an air intake side 12 and an air outlet side 13. In the example shown, air enters the chamber 11 through a plurality of vertically spaced inlet hoods 14 positioned along the air inlet side 12. The inlet hoods 14 function to protect internal components of the system 10 from the effects of rain, snow, and sun. Also, the inlet hoods 14 area configured such that air entering the inlet hoods 14 is first directed in an upward direction indicated by arrow 16, and then deflected by deflector plates 18 in a downward direction indicated by arrow 20. The subsequent downward movement of air forces dust within the chamber 11 downward toward a dust collection hopper 22 located at the bottom of the chamber 11.

The chamber 11 of the system 10 is divided into upstream and downstream volumes 24, 26 by a partition or tube sheet 28. The upstream volume 24 generally represents the "dirty air section" of the air cleaner system 10, while the downstream volume 26 generally represents the "clean air section" of the system 10. The tube sheet 28 defines a plurality of apertures 30 for allowing air to flow from the upstream volume 24 to the downstream volume 26. Each aperture 30 is covered by an air filter 32 located in the upstream volume 24 of the chamber 11. In this example, the air filter assembly 32 includes a filter pair 33, with two filters arranged in an end-to-end axial configuration. The filter pairs 33 are arranged and configured such that air flowing from the upstream volume 24 to the downstream volume 26 passes through the filter assembly 32 prior to passing through the apertures 30 and then downstream to the gas turbine 15. In general, the air filter assembly 32 functions to clean intake air before the intake air enters the gas turbine 15.

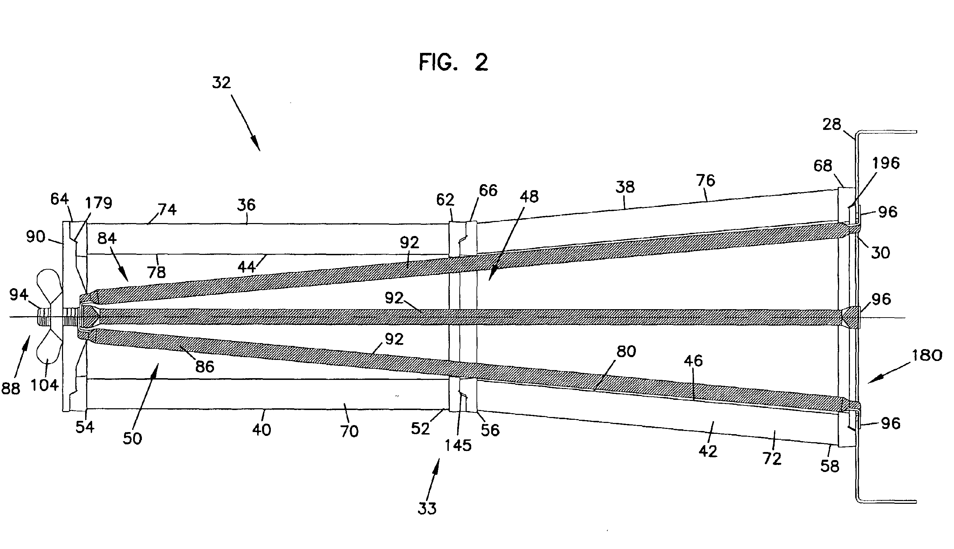

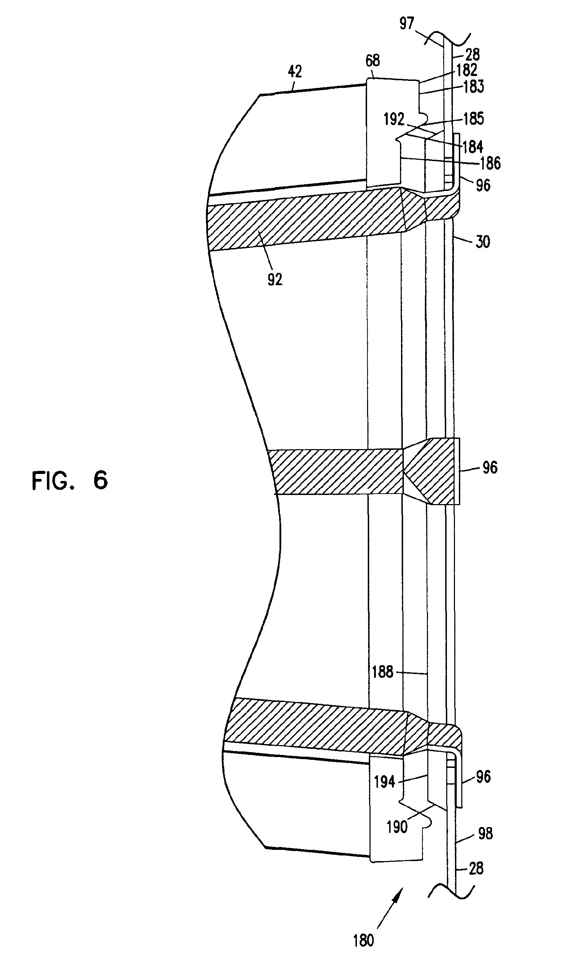

### B. Example Filter Assemblies FIGS. 2 - 8

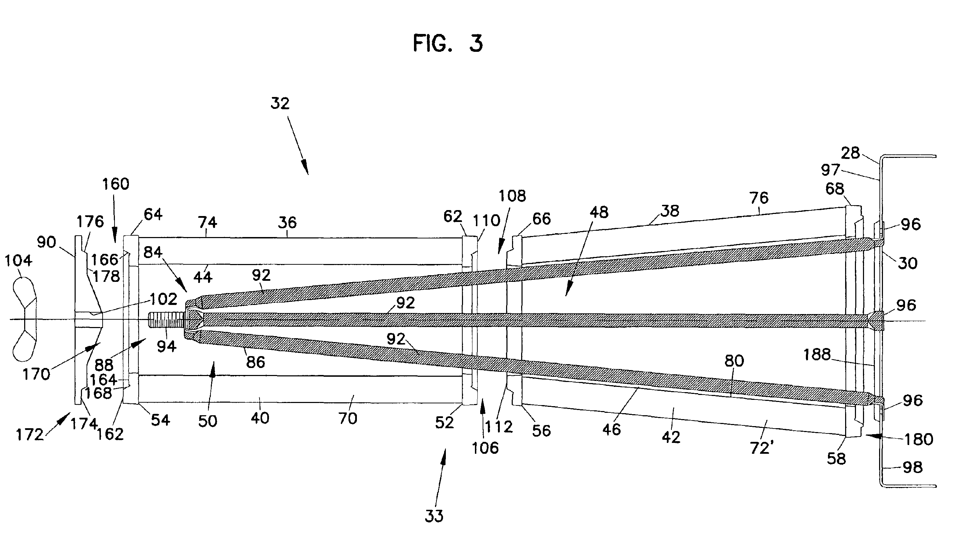

Attention is first directed to FIGS. 2 and 3. Air filter assembly 32 that is useable in the gas turbine air intake system 10 of FIG. 1 is depicted. In FIG. 2, the air filter assembly 32 is assembled together for operation, while in FIG. 3, the air filter assembly 32 is shown with the parts exploded. The filter pair 33 includes, in the embodiment illustrated, at least a first filter element 36 and a second filter element 38. As depicted in FIGS. 2 and 3, the first filter element 36 and the second filter element 38 are arranged to be axially stacked. By "axially stacked" it is meant that the first filter element 36 has a central longitudinal axis that is aligned with the central longitudinal axis of the second filter element 38 and the ends of each of the filter elements 36, 38 abut each other.

In FIG. 2, the air filter assembly 32 is shown operably installed against the tube sheet 28. In the embodiment shown, each of the filter elements 36, 38 has a respective region of filtering media 40, 42 that is oriented in a closed-tubular fashion to define an open filter interior volume 44, 46. When the first and second filter elements 36, 38 are operably assembled as shown in FIG. 2, the interior volumes 44, 46 together form a clean air volume 48 (FIG. 2) that is in air flow communication with the aperture 30 in the tube sheet 28. In general operation, dirty air to be cleaned flows from the atmosphere outside of the filter assembly 32, through the media 40, 42 and into the clean air volume 48. The air then flows through the aperture 30 in the tube sheet 28, into the downstream volume 26 (FIG. 1) and finally into the gas turbine 15.

Also viewable in FIGS. 2 and 3 is an axial compression mechanism 50 for connecting together the tube sheet 28, the second filter 38, and the first filter element 36.

The region of filter media 40 for the first element 36 has a first end 52 and a second end 54. Analogously, the region of filter media 42 of the second filter element includes first and second opposite ends 56, 58. In the example embodiment illustrated in FIGS. 2 and 3, each of the first and second ends 52, 54, 56, and 58 are secured to end caps 62, 64, 66, 68. In the example embodiments shown in FIGS. 2 and 3, the end caps 62, 64, 66, 68 are molded from a polyurethane material and the filter media 40, 42 is potted within its respective end cap during the molding process. Examples of useable materials for the end caps 62, 64, 66, and 68 are discussed below.

The filter media 40 in the first element 36 is preferably configured in a tubular configuration to define the clean air volume 44. In some embodiments, the media 40 includes pleated media 70, for example pleated cellulose. In some embodiments, the pleated media 70 includes a web of submicron diameter fibers applied to the surface. Analogously, the second filter element 38 has media 42 arranged in a tubular configuration. The media 42, in many preferred embodiments, includes pleated media 72 that can be made from cellulose and can be treated with a layer of submicron diameter fibers.

As mentioned above, the media 40 in the first filter element 36 forms a tubular configuration. This tubular configuration can form a variety of cross-sectional shapes. In the particular embodiment shown, the first filter element 36 has a circular cross-section such that the first filter element 36 is cylindrical. Each of the first and second filter elements 36, 38 can be a variety of shapes including oval, obround, race track shape, and frusto-conical. In the example embodiment illustrated in FIGS. 2 and 3, the second filter element 38 has a frusto-conical configuration. It can be seen that the first end cap 66 on the second filter element 38 is circular and has a diameter that is smaller than the circular diameter of the second end cap 68 on the second filter element 38. With this configuration, the media 42 for the second filter element 38 tapers or is angled from a narrow portion adjacent the first filter element to a wide portion adjacent to the tube sheet 28. This frusto-conical shape to the second filter element 38 also results in the clean air volume 46 within the second filter element 38 increasing from the volume adjacent to the first filter element 36 to the volume adjacent to the tube sheet 28. The increased volume results in a decrease in pressure. This overall shape of the clean air volume 48 helps to result in a uniform flow of dirty air through all of the media including the media 40 in the first filter element and the media 42 in the second filter element 38. Without this increase in clean air volume 48 adjacent to the tube sheet 28, the media 40 that is closest to the end cap 64 would have not as much air flow through it as the media 42 that is adjacent to the tube sheet 28. Thus, this type of design will result in a more uniform usage of the filter media along the entire length of the filter pair 33.

For the example embodiments shown in FIGS. 2 and 3, each of the first filter element 36 and second filter element 38 includes an outer filter support 74, 76, respectively. Each of the filter element 36, 38 also may include an inner filter support 78, 80, respectively. Each of the filter supports 74, 76, 78, 80 extends between the respective end caps 62, 64 and 66, 68 of the first and second filter element 36, 38. Each of the filter supports 74, 76, 78, 80 may be made from expanded metal, for example. The outer filter supports 74, 76 are configured to circumscribe the media 40, 42. Each of the inner filter supports 78, 80 are circumscribed by the media 40, 42 and line the interior volumes 44, 46. The filter supports 74, 76, 78, 80 help to allow the axial compression mechanism 50 to operate and insure a good seal between all the various components of the filter assembly 32.

Still in reference to FIGS. 2 and 3, the axial compression mechanism 50 is illustrated. The axial compression mechanism 50 operates to connect together the first filter element 36 and the second filter element 38 and further to hold the filter pair 33 against the tube sheet 28. The compression mechanism 50, in the embodiment shown, holds the filter pair 33 together against the tube sheet 28 in a way to create axial seals between the first filter element 36 and the second filter element 38, and also to create an axial seal between the second filter element 38 and the tube sheet 28.

While a variety of mechanisms can be used to connect together the filter elements 36, 38, in the particular embodiment illustrated, the axial compression mechanism includes a yoke assembly 84. The yoke assembly 84 includes a frame 86, a fastener assembly 88, and a cover 90. The frame 86, in the embodiment shown, includes a plurality of legs 92 that are sized to extend the complete length between the second end cap 64 on the first filter element 36 and the second end cap 68 on the second element 38. The legs 92 are secured to a bolt 94, which is part of the fastener assembly 88, at the end adjacent to the second end cap 64 of the first filter element 36. At the opposite end, each of the legs 92 includes a hook or foot 96. The foot 96 engages the tube sheet 28 on the downstream side 98 adjacent to the downstream volume 26 (FIG. 1).

The cover 90 defines a through hole 102 to receive the bolt 94 therethrough. A wing nut 104, or other suitable fastener, which is part of the fastener assembly 88, is secured to the bolt 94. As can be seen in FIG. 2, by securing the nut 104 onto the bolt 94, the first and second filter elements 36, 38 are subject to an axial force between the cover 90 and the feet 96 of the legs 92. Tightening the nut 104 against the cover 90 creates a compressive force that results in a seal between the first and second filter elements 36, 38 at their respective first end caps 62, 66. This force also creates a seal between the second end cap 68 and the tube sheet 28, and creates a seal between the cover 90 and the second end cap 64. These seals are all discussed further below. Other shapes of covers and other types of fastener assemblies can be used.

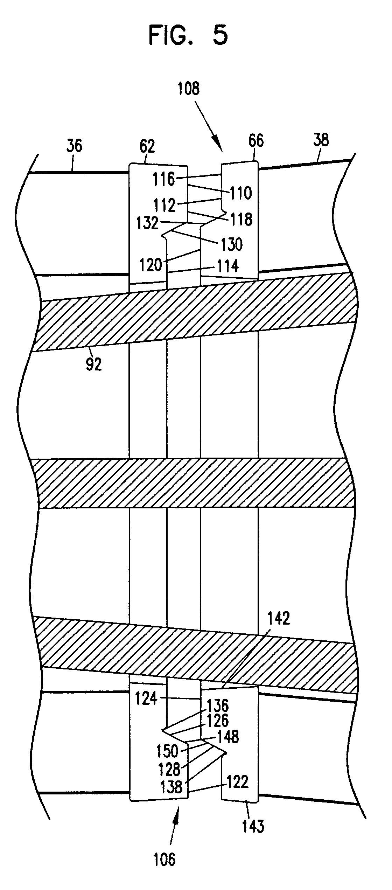

Each of the first and second filter elements 36, 38 includes at least one projection and recess arrangement 106, 108, respectively (FIGS. 3 and 5). The projection and recess arrangements 106, 108 allow for mating engagement between the first filter element 36 and second filter element 38. The projection and recess arrangements 106, 108, in preferred embodiments, help to guide the filter elements 36, 38 together to center them in axial alignment in order to create a good seal between them.

In the embodiments shown, the projection and recess arrangements 106, 108 are located on an outer surface 110, 112 of one of the end caps 62, 64, 66, 68 of the first and second filter elements 36, 38. By way of example, and in reference now to FIG. 5, the projection and recess arrangement 106 on the first filter element 36 is discussed with respect to the first end cap 62, while the projection and recess arrangement 108 for the second filter element 38 is discussed with respect to the first end cap 66. Each of the outer surfaces 110, 112 includes a recess or landing 114, 116 and a projection or protrusion 118, 120 projecting from the landing 114, 116, respectively. In preferred embodiments, each of the landing 114, 116 and the protrusion 118, 120 forms a continuous, closed ring.

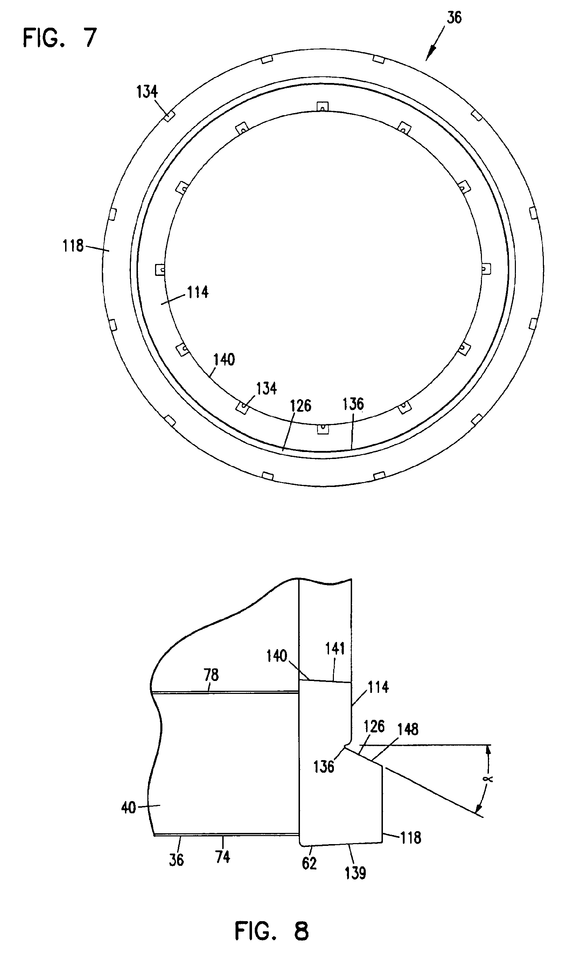

FIG. 7 shows an end view of the first filter element 36. It can be seen how the landing 116 and the protrusion 118 are generally continuous, closed rings or loops.

In preferred embodiments, each protrusion 118, 120 includes a plateau 122, 124 and a ramp 126, 128. In the embodiment shown, each of the ramps 126, 128 has a straight section 130, 132 extending a full length between a respective plateau 122, 124 and landing 114, 116. Preferably, the ramp 126, 128 intersects the landing 114, 116 at a non-orthogonal angle α thereto (FIG. 8). While FIG. 8 shows the end cap 62 for the first filter element 36, in preferred embodiments, the end cap 66 is the negative image and form of the end cap 62. Thus, the angle α shown in FIG. 8 for end cap 62 also applies to the angle between the ramp 128 and landing 116 of the projection and recess arrangement 108.

In preferred embodiments, the angle α will be in a range to provide for convenient and easy to use self-guiding between the two projection and recess arrangements 106, 108, while also being able to effect a good seal between the end caps 62, 66. If the angle α is too shallow, the guiding features are less effective; if too steep, the sealing features are less effective. In preferred embodiments, the angle α is at least 10°, and no greater than 80°. In many embodiments, the angle α is between 15° and 40°. In the particular embodiment illustrated in the Figures, the angle α is 25° - 35°, specifically 26° - 31°.

In the example embodiment illustrated, the plateau 122, 124 has a length greater than the length of the respective landing 114, 116. In some implementations, the plateau length is at least 10% greater than the landing length; in some implementations, the plateau length is 20% - 50% greater than the landing length.

In the specific embodiment illustrated, the plateau 122, 124 projects a certain distance away from the landing 114, 116, respectively. This distance is typically at least 0.25 inches, no greater than 1.5 inches, and in many embodiments is about 0.3 - 0.8 inches. In preferred embodiments, each plateau 122, 124 and landing 114, 116 is continuously flat. Attention is directed to FIG. 7. By "continuously flat", it is meant that there are generally no other bumps or protrusions. Indentations 134 can be seen, which result as part of the molding process. Despite the shallow indentations 134, the plateau 122, 124 and landing 114, 116 are still considered to be continuously flat. In some implementations, it may be desirable to include ornamentation on the plateau 122, 124; the landing 114, 116; or both; in such instances, the ornamentation may be molded therewithin, but in general, the plateau 122, 124 and landing 114, 116 would still considered to be continuously flat.

In many embodiments, it is contemplated that between the ramp 126, 128 and the landing 114, 116, there will be a trough 136, 138. The trough 136, 138 is created to help in the de-molding process when making the end caps 62, 66.

In FIGS. 5 and 8, it can be seen how the end cap 62 has the protrusion 118 adjacent to the outermost periphery 139 of the filter element 36, while the landing 114 is adjacent to the inner periphery 140 of the end cap 62. The inner periphery 140 defines a through aperture 141, through which air flows and through which the legs 92 of the yoke assembly 84 extend. As can be seen in FIG. 5, the end cap 66 has the negative shape of the end cap 62. That is, the protrusion 120 is adjacent to the inner periphery 142, while the landing 116 of the end cap 66 is adjacent to the outer periphery 143. This type of symmetry allows for an inter-nesting engagement between the end caps 62, 66 and between the projection and recess arrangement 106 and projection and recess arrangement 108.

In particular, the first filter element first end cap plateau 122 abuts against the landing 116 of the second filter element first end cap 66. Analogously, the plateau 124 of the second filter element first end cap 66 abuts against the landing 114 of the first filter element first end cap 62. When axial compression is applied, a seal 145 (FIG. 2) is formed between the straight sections 130, 132 of the ramps 126, 128. While moving the filter elements 36, 38 relative to each other in order to install the elements 36, 38 against the tube sheet 28, the projection and recess arrangements 106, 108 engage each other to help center and orient the end caps 62, 66 against each other. In other words, the ramps 126, 128 help to guide and center the elements 36, 38 together. The straight sections 130, 132 also act as sealing surfaces 148, 150, as is apparent from the above discussion. In some embodiments, there may also be at least some sealing effect created by the axial engagement between the respective plateaus 122, 124 and the opposite landing 114, 116. However, it is contemplated that in certain preferred embodiments, the main seal 145 will be between the sealing surfaces 148, 150. The shapes of the end caps 62, 66 also helps to relieve axial loading pressure from the filter media 40, 42. The axial loading is transferred to the outer supports 74, 76 by the projection and recess arrangements 106, 108.

In some embodiments, the first filter element 36 will have a projection and recess arrangement only on one of the end caps 62, 64. In such embodiments, the second end cap 64 would be shaped as a conventional end cap that is known to those skilled in the art. However, in the example embodiment illustrated in FIGS. 2 and 3, the second end cap 64 also includes a projection and recess arrangement 160 (FIG. 3). While the projection and recess arrangement 160 can be many different shapes, in the embodiment shown, the projection and recess arrangement 160 has an identical shape as the projection and recess arrangement 106 of the first end cap 62. This allows for convenient manufacturing techniques, in that each of the end caps 62 and 64 can be cast from the same mold. In addition, the resulting filter element 36 is universal in its orientation. This means that either end 52 or 54 can be used to engage the second filter element 38 or to engage the cover 90. Because the projection and recess arrangement 160 is constructed identically as the projection and recess arrangement 106, it includes a projection in the form of a protrusion 162; a recess in the form of a landing 164; and a sealing surface 166 in the form of a ramp 168.

The cover 90 includes an inner cover surface 170. In the embodiment shown, in which the end cap 64 is shaped as described above, the inner cover surface 170 includes a projection and recess arrangement 172. This allows for inter-nesting engagement between the cover 90 and the projection and recess arrangement 160 of the second end cap 164. The projection and recess arrangement 172 includes landing 174, sealing surface 176, and plateau 178. When the cover 90 is tightened against the first filter element 36, the sealing surface 176 of the cover 90 engages the sealing surface 166 of the second end cap 64, while the projection on the protrusion 162 engages the landing 174 of the cover 90. This creates a seal 179 (FIG. 2) between the cover 90 and the second end cap 64 of the first filter element 36.

The second filter element 38 may include just a single projection and recess arrangement 108 on one of its end caps 66, 68, or may include a projection and recess arrangement on each of its end caps 66, 68. In the embodiment shown in FIGS. 2, 3, and 6, each of the end caps 66 and 68 includes a projection and recess arrangement 108, 180, respectively. The projection and recess arrangement 180, in the example embodiment shown, has the same shape as the projection and recess arrangement 106 and 160, although it is dimensionally bigger when a frusto-conically shaped second filter element 38 is desired.

The projection and recess arrangement 180 includes a projection in the form of protrusion 182 having a plateau 183 and a sealing surface 184 in the form of a ramp 185. The recess is in the form of landing 186. The tube sheet 28 is fitted with a ring 188 to provide a mating sealing surface 190 in the form of a ramp 192. The ramp 192 extends between the upstream side 97 of the tube sheet 28 and an axial surface 194 of the ring 188. When the second end cap 68 includes a projection and recess arrangement 180, the ring 188 will be aligned with and hug the circumference of the tube sheet aperture 30. When the second filter element 38 is compressed against the tube sheet 28, the plateau 183 engages the upstream side 97 of the tube sheet 28, while the sealing surfaces 184 and 190 engage each other to form a seal 196 (FIG. 2) therebetween.

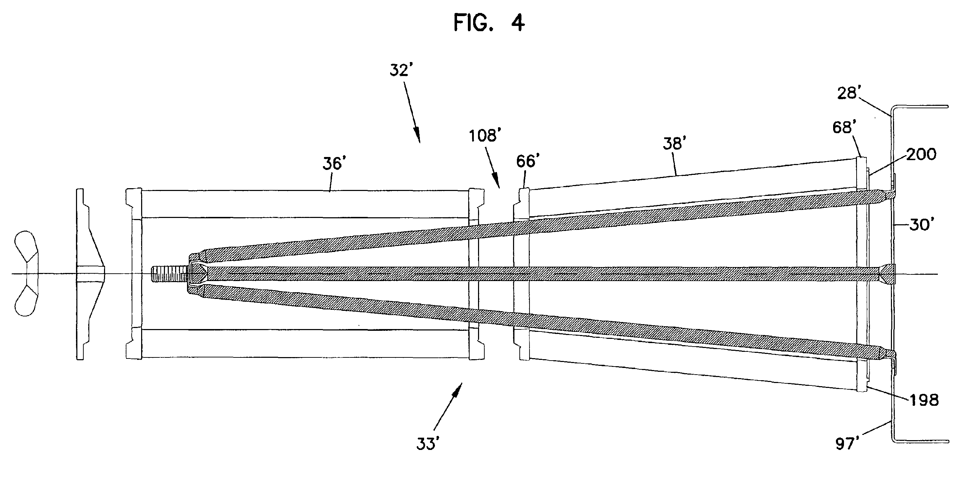

An alternate embodiment of the second filter element 38 is shown in FIG. 4 at 38' as part of an alternate filter assembly 32'. In the embodiment shown in FIG. 4, the first filter element 36' is constructed the same as the first filter element 36 of FIGS. 2 and 3. The second filter element 38' has only a single projection and recess arrangement 108' for the first end cap 66'. The second end cap 68' has a generally flat axial surface 198 and a gasket 200 projecting therefrom. The gasket 200 is shaped such that when the second filter element 38 is compressed against the upstream surface 97' of the tube sheet 28', there is an axial seal formed between and against the gasket 200 and the upstream surface 97' of the tube sheet 28'. The gasket 200, in the embodiment shown, has a generally rectangular cross-sectional shape. The gasket 200 can be many different types of seal members, for example, an O-ring. The embodiment of FIG. 4 is convenient in that the tube sheet 28' does not need to be retro-fitted with rings 188 in order to create a seal with the second filter element 38'.

### C. Example Materials

The end caps 62, 64, 66, 68, when made to include the projection and recess arrangements 106, 108, 160, 180, are preferably constructed of a moldable material. For example, one useful material is a polyurethane material, specifically a polyurethane foam material having an "as-molded" density of less then 25 pounds per cubic foot, and typically about 11 - 22 pounds per cubic foot. This material permits the protrusions 118, 120, 162, 182 to be soft and compressible, such that seals 145, 179, 196 can be formed. An example of suitable materials for the end caps are described in U.S. Patent No. 5,613,992, incorporated by reference herein.

For the alternate embodiment shown in FIG. 4, the end cap 68' can be made of a variety of materials including a hard urethane plastic, or from metal. The gasket 200 can be made from a compressible material, such as foam, urethane, or foamed urethane.

The filter media is preferably pleated cellulose media. As explained in U.S. Patent Nos. 5,423,892 and 5,672,399, which patents are incorporated herein by reference, it may be desirable, depending upon the application, to modify the efficiency of the pleated cellulose media by applying to the surface of the media a deposit of relatively fine fibers, typically less than 5 microns, and in many instances, submicron sized fibers.

The inner filter supports 78, 80 and the outer filter supports 74, 76 should be made of a material that can sustain axial loading due to the compressive forces of the axial compression mechanism 50. Useful materials for the filter supports 74, 76, 78, 80 include expanded metal.

### D. Methods

To install the filter assembly 32 into the system 10, the yoke assembly 84 is secured to the tube sheet 28 by hooking the feet 96 of the legs 92 into the aperture 30 and securing it thereto. The second filter element 38 is passed over the legs 92, such that the end 58 is adjacent to the tube sheet 28. The first filter element 36 is oriented over the legs 92 such that one of the end caps 62, 64 is adjacent to the end cap 66 of the second filter element 38. The first filter element 36, in the embodiment shown in FIGS. 2 and 3, is reversible, such that either end cap 62 or 64 can be used to engage the second filter element 38.

The first filter element 36 is placed against the second filter element 38, and the cover 90 is placed over the bolt 94. The nut 104 is turned on the bolt 94 which moves it axially against the cover 90. As the nut 104 and cover 90 are moved axially, the projection and recess arrangement 106 inter-nests and engages the projection and recess arrangement 108. The ramps 126, 128 and the protrusions 118, 120 help to align and center the filter elements 36 and 38 with each other in order to obtain a good and effective seal 145.

As the nut 104 is turned on the bolt 94, the second end cap 68 of the second filter element 38 is pushed against the seal ring 188 on the tube sheet 28. This compressive force eventually creates the seal 196 between the second filter element 38 and the seal ring 188 on the tube sheet 28. Further, as the nut 104 is turned on the bolt 94, the cover 90 is squeezed against the second end cap 64 of the first filter element 36. Eventually, seal 179 is created between the sealing surface 176 and sealing surface 166.

In use, a plurality of filter assemblies 32 are mounted against the tube sheet 28, as shown in FIG. 1. Dirty air to be cleaned flows into the system 10 at arrows 16. The hoods 14 act as moisture separators or de-foggers. The air then flows in the direction of arrow 20 into the filter pairs 33. The air flows from the outside of the filter pairs 33 through the media 36, 38, and into the clean air volume 48. The media 40, 42 collects at least a portion of particulate material from the air preventing it from passing into the clean air volume 48. From the clean air volume 48, the air flows through the apertures 30 in the tube sheet 28 and into the downstream volume 26. The cleaned air is then directed into the gas turbine 15.

After a period of use, the filter media 40, 42 will become occluded or clogged. When this happens, the restriction becomes too high for effective operation of the system 10. The system 10 then needs to be serviced. To service the air filter assembly 32, the first and second filter elements 36, 38 are removed from the tube sheet 28. This is done by using the axial compression mechanism 50 to release the filter elements 36 and 38 from each other and from the tube sheet 28. In the example embodiments shown, the nut 104 is turned relative to the bolt 94 to remove the cover 90 from the first filter element 36. This releases the seals 179, 145 and 196. The first filter element 36 is removed from over the frame 86 of the yoke assembly 84, and then the second filter element 38 is removed from over the frame 86. The old filter elements 36, 38 are discarded. A second, new pair of filter elements 36, 38 are then provided. These second, new filter elements 36, 38 are then installed against the tube sheet 28 as described above.

In general, a filter element is provided including a region of filter media having a first end and an opposite second end; a first end cap secured to the first end; the first end cap including an outer surface facing a direction opposite from the filter media; and the outer surface including a landing and a protrusion projecting from the landing.

In example implementations, the protrusion forms a continuous closed ring; the protrusion having a plateau and a ramp.

In example implementations, the ramp has a straight section; the straight section extending a full length between the plateau and the landing at a non-orthogonal angle thereto; the plateau having a length greater than a length of the landing.

Preferably, the region of filter media is tubular defining an open filter interior volume; and the first end cap defines an aperture in communication with the open filter interior volume.

In preferred embodiments, there is a second end cap secured to the second end.
Example embodiments include the second end cap defining an aperture in communication with the open filter interior volume.

Preferably, the second end cap includes a second end cap outer surface facing a direction opposite from the filter media; the second end cap outer surface including a second end cap landing and a second end cap protrusion projecting from the second end cap landing; the second end cap protrusion forming a continuous closed ring; the second end cap protrusion having a second end cap plateau and a second end cap ramp; the second end cap ramp having a second end cap straight section; the second end cap straight section extending a full length between the second end cap plateau and the second end cap landing at a non-orthogonal angle thereto; the second end cap plateau having a length greater than a length of the second end cap landing.

In some implementation, the region of filter media is cylindrical; and the first end cap and the second end cap are circular having same diameters.

In some implementations, the region of filter media is frusto-conical; and the first end cap and the second end cap are circular; the first end cap having a diameter smaller than the second end cap.

In some embodiments, the region of filter media is non-cylindrical.

In some embodiments, there is an inner filter support tube extending between the first end cap and the second end cap; the inner support tube lining the open filter interior volume.

In some embodiments, there is an outer filter support tube extending between the first end cap and the second end cap; the outer support tube circumscribing the region of filter media.

In some example implementations, the plateau length is at least 10% greater than the landing length; the non-orthogonal angle of the ramp relative to the landing and the plateau is at least 10°; and the plateau projects a distance of at least 0.25 inches from the landing.

In some example implementations, the plateau length is 20-50% greater than the landing length; the non-orthogonal angle of the ramp relative to the landing and the plateau is 15°- 40°; and the plateau projects a distance of 0.3-0.8 inches from the landing.

In some example implementations, the plateau is continuously flat; and the landing is continuously flat.

In some implementations, the first end cap outer surface further includes a first trough between the ramp and the landing.

In some embodiments, the second end cap outer surface further includes a second trough between the second end cap outer surface ramp and the second end cap outer surface landing.

In general, a filter assembly is provided including a first filter element having a region of filter media and at least a first end cap secured to the filter media; the first filter element first end cap defining a first filter element first end cap projection and recess arrangement; a second filter element having a region of filter media and at least a second filter element first end cap secured to the second filter element region of filter media;
the second filter element first end cap defining a second filter element first end cap projection and recess arrangement; and a seal between the first filter element and the second filter element; the seal being formed by compression of the first filter element and the second filter element with the first filter element first end cap projection and recess arrangement being in mating engagement with the second filter element first end cap projection and recess arrangement.

In one example, the seal is formed by axial compression.

In some implementations, the first filter element first end cap projection and recess arrangement includes a projection having a plateau spaced from a landing with a ramp extending between the plateau and the landing; the second filter element first end cap projection and recess arrangement includes a projection having a plateau spaced from a landing with a ramp extending between the plateau and the landing; the seal is formed between the first filter element first end cap ramp and the second filter element first end cap ramp; the first filter element first end cap projection abuts against the second filter element first end cap landing; and the second filter element first end cap projection abuts against the first filter element first end cap landing.

In some examples, the first filter element is tubular has an open filter interior volume; the first filter element first end cap defines an aperture in communication with the open filter interior volume; the second filter element is tubular having an open filter interior volume; and the second filter element first end cap defines an aperture in communication with the open filter interior volume.

Some preferred systems include a second end cap on the first filter element; and a second end cap on the second filter element.

Some example implementations include a cover in sealing engagement with the first filter element second end cap.

Some example embodiments include a yoke assembly extending through the cover and connecting together the first filter element and the second filter element.

In some systems, the second end cap on the first filter element includes a first filter element second end cap projection and recess arrangement; the cover includes a cover projection and recess arrangement; and the first filter element second end cap projection and recess arrangement is in mating engagement with the cover projection and recess arrangement.

In some systems, there is a tube sheet defining an aperture in communication with the second filter element open interior volume; the yoke assembly extending through the cover and the tube sheet to connect together the first filter element and the second filter element and the tube sheet.

In some systems, the second end cap on the second filter element includes a second filter element second end cap projection and recess arrangement; the tube sheet includes a tube sheet projection and recess arrangement; and the second filter element second end cap projection and recess arrangement is in mating engagement with the tube sheet projection and recess arrangement.

In some example embodiments, the second end cap on the second filter element includes a flat surface with a gasket projecting therefrom; the tube sheet includes a flat sealing surface; and an axial seal is formed between the second filter element second end cap gasket and the tube sheet flat sealing surface.

In one example embodiment, the first filter element is cylindrical; and the second filter element is frusto-conical.

In general, there is provided a gas turbine system including a gas turbine adapted to draw intake air; and a filter arrangement to clean the intake air before the intake air enters the gas turbine; the filter arrangement including a plurality of filter pairs; each of the filter pair including: a first filter element having a region of filter media and at least a first end cap secured to the filter media; the first filter element first end cap defining a first filter element first end cap projection and recess arrangement; a second filter element having a region of filter media and at least a second filter element first end cap secured to the second filter element region of filter media; the second filter element first end cap defining a second filter element first end cap projection and recess arrangement; and
a seal between the first filter element and the second filter element; the seal being formed by compression of the first filter element and the second filter element with the first filter element first end cap projection and recess arrangement being in mating engagement with the second filter element first end cap projection and recess arrangement.

In some example embodiments, there is a tube sheet defining a plurality of apertures; each of the second filter elements in each of the filter pairs being sealed against the tube sheet to provide air flow communication between the filter pairs and a respective aperture in the tube sheet.

In general, there is a method of installing a filter assembly; the method comprising providing a first filter element having a region of filter media and a first end cap secured to the filter media; the first filter element first end cap defining a first filter element first end cap projection and recess arrangement; providing a second filter element having a region of filter media and a second filter element first end cap secured to the second filter element region of filter media; the second filter element first end cap defining a second filter element first end cap projection and recess arrangement; and mating the first filter element first end cap projection and recess arrangement with the second filter element first end cap projection and recess arrangement to form a seal therebetween.

In some examples, the step of providing a first filter element includes providing the first filter element first end cap projection and recess arrangement with a projection having a plateau spaced from a landing with a ramp extending between the plateau and the landing; the step of providing a second filter element includes providing the second filter element first end cap projection and recess arrangement with includes a projection having a plateau spaced from a landing with a ramp extending between the plateau and the landing; and the step of mating includes: engaging the first filter element first end cap ramp and the second filter element first end cap ramp; abutting the first filter element first end cap projection against the second filter element first end cap landing; and abutting the second filter element first end cap projection against the first filter element first end cap landing.

In one example, there is a step of using a yoke assembly to axially compress the first filter element against the second filter element.

Preferably, the step of using a yoke includes connecting together the first filter element, the second filter element, a tube sheet and a cover member.

The above specification, examples and data provide a complete description. Many embodiments can be made without departing from the spirit and scope of the invention.

## Claims

1. A filter element (36) comprising a region of filter media (40) having a first end (52) and an opposite second end (54); and a first end cap (62) secured to said first end; said first end cap including an outer surface (110) facing a direction opposite from said filter media; the filter element being **characterized by**:
(a) said outer surface including a landing (114) and a protrusion (118) projecting from said landing;
(i) said protrusion forming a continuous closed ring; and
(ii) said protrusion having a plateau (122) and a ramp (126).

2. A filter element according to claim 1 wherein:
(A) said ramp has a straight section (130); said straight section extending a full length between said plateau and said landing at a non-orthogonal angle (α) thereto;
(B) said plateau having a length greater than a length of said landing.

3. A filter element according to claim 2 wherein:
(a) said plateau length is at least 10% greater than said landing length;
(b) said non-orthogonal angle of said ramp relative to said landing and said plateau is at least 10°; and
(c) said plateau projects a distance of at least 0.635 cm (0.25 inches) from said landing.

4. A filter element according to any one of claims 2 and 3 wherein:
(a) said plateau is continuously flat; and
(b) said landing is continuously flat.

5. A filter element according to any one of claims 1-4 wherein:
(a) said region of filter media is tubular defining an open filter interior volume (44); and
(b) said first end cap defines an aperture (141) in communication with said open filter interior volume.

6. A filter element according to any one of claims 1-5 further including:
(a) a second end cap (64) secured to said second end;
(b) said second end cap defines an aperture in communication with said open filter interior volume;
(c) said second end cap includes a second end cap outer surface facing a direction opposite from said filter media;
(i) said second end cap outer surface including a second end cap landing (164) and a second end cap protrusion (162) projecting from said second end cap landing;
(A) said second end cap protrusion forming a continuous closed ring;
(B) said second end cap protrusion having a second end cap plateau and a second end cap ramp (168);
(1) said second end cap ramp having a second end cap straight section; said second end cap straight section extending a full length between said second end cap plateau and said second end cap landing at a non-orthogonal angle thereto;
(2) said second end cap plateau having a length greater than a length of said second end cap landing.

7. A filter element according to claim 6 wherein:
(a) said region of filter media is cylindrical; and
(b) said first end cap and said second end cap are circular having same diameters.

8. A filter element according to claim 6 wherein:
(a) said region of filter media is frusto-conical; and
(b) said first end cap and said second end cap are circular; said first end cap having a diameter smaller than said second end cap.

9. A filter element according to claim 6 wherein:
(a) said region of filter media is non-cylindrical.

10. A filter element according to claim 6 further comprising:
(a) an inner filter support tube (78) extending between said first end cap and said second end cap; said inner support tube lining said open filter interior volume;
(b) an outer filter support tube (74) extending between said first end cap and said second end cap; said outer support tube circumscribing said region of filter media.

11. A filter element according to any one of claims 1-10 wherein:
(a) said first end cap outer surface further includes a first trough (136) between said ramp and said landing.

12. A filter assembly (32) comprising a first filter element (36) having a region of filter media (40) and at least a first end cap (62) secured to the filter media; a second filter element (38) having a region of filter media (42) and at least a second filter element first end cap (66) secured to the second filter element region of filter media; the assembly **characterized by**:
(a) said first filter element first end cap defining a first filter element first end cap projection and recess arrangement (106);
(b) said second filter element first end cap defining a second filter element first end cap projection and recess arrangement (108); and
(c) a seal (145) between said first filter element and said second filter element;
(i) said seal being formed by compression of said first filter element and said second filter element with said first filter element first end cap projection and recess arrangement being in mating engagement with said second filter element first end cap projection and recess arrangement.

13. A filter assembly according to claim 12 wherein:
(a) said seal is formed by axial compression.

14. A filter assembly according to any one of claims 12 and 13 wherein:
(a) said first filter element first end cap projection and recess arrangement includes a projection having a plateau spaced from a landing with a ramp extending between the plateau and the landing;
(b) said second filter element first end cap projection and recess arrangement includes a projection having a plateau spaced from a landing with a ramp extending between the plateau and the landing;
(c) said seal is formed between said first filter element first end cap ramp and said second filter element first end cap ramp;
(d) said first filter element first end cap projection abuts against said second filter element first end cap landing; and
(e) said second filter element first end cap projection abuts against said first filter element first end cap landing.

15. A filter assembly according to claim 14 wherein:
(a) said first filter element is tubular having an open filter interior volume;
(b) said first filter element first end cap defines an aperture in communication with said open filter interior volume;
(c) said second filter element is tubular having an open filter interior volume;
(d) said second filter element first end cap defines an aperture in communication with said open filter interior volume.

16. A filter assembly according to claim 15 further including:
(a) a second end cap on said first filter element; and
(b) a second end cap on said second filter element.

17. A filter assembly according to claim 16 further including:
(a) a cover in sealing engagement with said first filter element second end cap.

18. A filter assembly according to claim 17 further including:
(a) a yoke assembly extending through said cover and connecting together said first filter element and said second filter element.

19. A filter assembly according to claim 18 wherein:
(a) said second end cap on said first filter element includes a first filter element second end cap projection and recess arrangement;
(b) said cover includes a cover projection and recess arrangement; and
(c) said first filter element second end cap projection and recess arrangement is in mating engagement with said cover projection and recess arrangement.

20. A filter assembly according to claim 19 wherein:
(a) said first filter element is cylindrical.

21. A filter assembly according to claim 20 further comprising:
(a) a tube sheet defining an aperture in communication with said second filter element open interior volume;
(i) said yoke assembly extending through said cover and said tube sheet to connect together said first filter element and said second filter element and said tube sheet.

22. A filter assembly according to claim 21 wherein:
(a) said second end cap on said second filter element includes a second filter element second end cap projection and recess arrangement;
(b) said tube sheet includes a tube sheet projection and recess arrangement; and
(c) said second filter element second end cap projection and recess arrangement is in mating engagement with said tube sheet projection and recess arrangement.

23. A filter assembly according to claim 21 wherein:
(a) said second end cap on said second filter element includes a flat surface with a gasket projecting therefrom;
(b) said tube sheet includes a flat sealing surface; and
(c) an axial seal is formed between said second filter element second end cap gasket and said tube sheet flat sealing surface.

24. A filter assembly according to any one of claims 12-23 wherein:
(a) said first filter element is cylindrical; and
(b) said second filter element is frusto-conical.

25. A gas turbine system (10) comprising a gas turbine (15) adapted to draw intake air; and a filter assembly according to any one of claims 12-23 to clean the intake air before the intake air enters the gas turbine.

26. A method of installing a filter assembly; the method comprising providing a first filter element having a region of filter media and a first end cap secured to the filter media; providing a second filter element having a region of filter media and a second filter element first end cap secured to the second filter element region of filter media; and mating the first filter element and the second filter element; the method being **characterized by**:
(a) the first filter element first end cap defines a first filter element first end cap projection and recess arrangement;
(b) the second filter element first end cap defines a second filter element first end cap projection and recess arrangement; and
(c) the step of mating the first filter element and the second filter element includes mating the first filter element first end cap projection and recess arrangement with the second filter element first end cap projection and recess arrangement to form a seal therebetween.

27. A method according to claim 26 wherein:
(a) said step of providing a first filter element includes providing the first filter element first end cap projection and recess arrangement with a projection having a plateau spaced from a landing with a ramp extending between the plateau and the landing;
(b) said step of providing a second filter element includes providing the second filter element first end cap projection and recess arrangement with includes a projection having a plateau spaced from a landing with a ramp extending between the plateau and the landing; and
(c) the step of mating includes: engaging the first filter element first end cap ramp and the second filter element first end cap ramp; abutting the first filter element first end cap projection against the second filter element first end cap landing; and abutting the second filter element first end cap projection against the first filter element first end cap landing.

28. A method according to any one of claims 26 and 27 further including:
(a) using a yoke assembly to axially compress the first filter element against the second filter element.

29. A method according to claim 28 wherein:
(a) the step of using a yoke includes connecting together the first filter element, the second filter element, a tube sheet and a cover member.
